# EUROPEAN PATENT APPLICATION

(11) **EP 1 320 025 A2**
(43) Date of publication of application: **18.06.2003**
(21) Application number: 02028081.4
(22) Date of filing: 17.12.2002
(51) Int. Cl.: G06F 3/16

(54) **Voice memo reminder system and associated methodology**

(30) Priority: 17.12.2001 US 341536 P; 05.12.2002 US
(71) Applicant: Ewig Industries Co., Ltd., Kwun Tong, Kowloon, Hong Kong (CN)
(72) Inventor: Chang, Chee Ann, Hong Kong (CN); Wu, Kai Wai, Jade Heights, Belair Gardens, Hong Kong (CN); Yuen, Wai Manh, Hong Kong (CN)
(74) Representative: Hössle Kudlek & Partner

(57) **Abstract**

A system for the generation and retrieval of voice memo reminders at designated time intervals. A user controls the system by selecting one or more buttons at a user interface, to initiate voice recording and chose a specific time delay for message playback. A microphone captures voice data when selected by the user. The system is microprocessor-controlled, for storing messages into digital memory and for processing audible replay of individual stored voice messages according to the time delay of the individually stored voice messages. A speaker is provided for audibly replaying the voice messages.

## Description

### RELATED APPLICATIONS

This application claims priority to U.S. provisional application serial number 60/341,536, filed December 17, 2001, entitled "VOICE MEMO REMINDER SYSTEM, AND ASSOCIATED METHODOLOGY" and which is incorporated herein by reference.

### BACKGROUND

There is increasing competition in business environments. To assist in this competition, the marketplace has introduced an array of digital devices, e.g., palm data devices and voice recorders, for storage and retrieval of specific inputted information. Nevertheless, managers and executives still heavily rely on their secretarial and administrative staff because of certain inefficiencies in these devices.

By way of example, consider voice recorders, which are well known in the prior art. The following patents, each incorporated herein by reference, exemplify various prior art voice recorders: U.S. Patent No. 5,956,298; U.S. Patent No. 5,742,737; U.S. Patent No. 4,317,189; and U.S. Patent No. 4,011,586. Prior art voice recorders generally include various buttons to initiate and record voice information; another set of buttons are used to play back messages. However, much of the value of these voice recorders is lost because users are too busy to counter-check the recorded information. Accordingly, in order to effectively track recorded information, these users again rely on secretarial and administrative staff to review and separately log voice messages. Altogether, maintaining and tracking the recorded information is a burdensome process; it is often, therefore, neglected entirely.

### SUMMARY

In one aspect, a voice memo reminder system is provided. The system is microprocessor-controlled and may be battery-powered. A user controls the system by selecting one or more buttons at a user interface. A microphone captures voice data when selected by the user. Voice data is stored by a processing component as a message file in internal memory, or within a separate memory element. Voice data may be replayed to the user, automatically and/or selectively, through a speaker with the system. Messages are preferably stored in memory with an associated time tag and numerical index number, and then later replayed through the speaker at a time associated with the time tag (e.g., a voice message recorded is entered to have relevance at 10 A.M. the next day and is replayed at that time, or the recorded message is selected for playback one hour later from the time of recording logged by the system). The system appropriately handles recorded messages according to different selections (arrays of options) at the user interface.

In another aspect, the buttons of the user interface control the selection of recording functions of the system. The user may select user interface buttons to record a voice message, and to select replay of the voice message at a selected time delay. The buttons may be associated with standard numeric values (e.g., 0 to 9) and with the time of day (e.g., A.M. or P.M.) for selection of a date and time for message replay, or associated with set time delay intervals (e.g., 15 minutes, 30 minutes, 1 hour, 2 hours, ½ day, 1 day, 1 month, etc.) measured from a time delay logged by the system. Buttons may also invoke various message functions, such as playback of messages, forward or backward skipping to other messages, and deletion of all messages or a currently selected message. Also, a user may set the current time and date within the system by initiation of one or more interface buttons.

In yet another aspect, a display informs the user of the total number of recorded messages and/or the current date and time. The display may also provide the selected time delay for message replay, index number of a message that is currently being recorded, played and/or deleted, and may provide the number of messages missed by the user. Further, an illuminator may be included with the system to function either independently, or in conjunction with the display, to alert the user of certain message handing events, such as whether a message has been missed (i.e., played back for the user without acknowledgement of the playback).

The system may also store task data in association with storage of a particular voice message. Tasks are textual components of a message that provide a title or label to such message (e.g., "Doctor's Appointment" associated with voice data scheduled for playback in 30 minutes). The task may be entered into the system by one of known techniques, e.g., by a keypad at the user interface, or by another electronic device through an interface unit, or by handwriting onto a data input screen. Tasks may be used to index associated voice messages for viewing on the display.

In another aspect, the display screen displays a calendar matrix. The calendar matrix may be used for selection of a specific date upon which a stored message or task will be replayed. Dates in which a message/task is scheduled for replay will have a marker (e.g., they are "highlighted") to differentiate scheduled dates from dates without scheduling so that a user can quickly determine which dates on the calendar matrix have scheduled activities. When a user selects a particular date on the calendar matrix, tasks stored in association with messages scheduled for playback on such date may be displayed next to the matrix (e.g., "Doctor's Appointment") such that the user is reminded of the content of the associated message.

In addition to the above-described aspects for setting a reminder, one optional feature ensures that the user receives the recorded message(s)/reminder(s) in playback by implementing a "snooze" function. Visual and/or audible alerts may continuously remind the user if message playback has not been acknowledged.

Still another feature of the system is to ensure that the message(s) playback to the correct person. By initiating a numeric password lock, the system only plays back messages when it is unlocked, thereby ensuring privacy and confidentiality.

In another aspect, a message handling switch selects message handling characteristics for a stored message upon replay. By way of example, the switch can be set for automatic deletion of messages after playback, or automatic retention of messages after playback of such messages, with or without subsequent automatic playback at a specific time delay.

In another aspect, an interface unit connects with system memory for transferring messages/tasks from the memory to an external device. The interface unit may be configured for transferring digital message data or audio messages to the system. Data may also be communicated from system memory to the external device, in one aspect.

In another aspect, a housing integrates the user interface, microphone, speaker, microprocessor, and/or display as a monolithic unit that is sized and configured to hold in one hand of a user.

In another aspect, a method is provided for storing voice messages and for selectively replaying the messages at a selectable time delay. The method includes the steps of: pressing one of several buttons on a hand-held voice memo reminder system, to initiate voice recording and to time tag the voice recording with a time delay, and audibly regenerating the voice recording automatically after the time delay.

Certain advantages are therefore provided by the systems and method above. For example, one system provides a "one-hand" operating device that can audibly remind the user about entered or recorded tasks or appointments according to a pre-set time. By way of example, the user may select a button corresponding to a particular time delay (e.g., 5 minutes, 10 minutes, 15 minutes, 30 minutes, 45 minutes, 1 hour, 2 hours, ½ day, 1 day, 1 month, 1 year) to enable a very direct and simple setting of automatic voice reminder functions. The user then benefits from the message reminders so they can organize themselves according to individual scheduling of important events; more particularly, they may be reminded of the time by their own recorded voice replayed from system's speaker. In another example, the systems and method herein do not require third party intervention, thereby reducing transaction costs associated with staff and secretarial staff. The system may further support various uses, including:
Office or Home Message Center
Multi-alarm clock with the play-back of recorded voice
Multi-alarm watch with the play-back of recorded voice
Voice reminding pill box
Voice reminding cooking timer
Portable Reminder

The system efficiently permits recapture of voice recorded data, and operates in a more simple and efficient manner as compared to prior voice recorders.

### BRIEF DESCRIPTION OF THE DRAWINGS

FIG. 1 shows a schematic block diagram of one voice memo reminder system;

FIGS. 2A-2C show a schematic circuit diagram, suitable for use with the voice memo reminder system of FIG. 1.

FIGS. 3A-3D show various views (front view, end view, side view and back view) of one voice reminder system;

FIGS. 4A-4E show various views (front view, end view, side view, perspective view with cradle pad closed and perspective view with cradle pad opened) of the system of FIG. 3 and attached to a cradle;

FIGS. 5A-5C show various views (back view, end view, side view) of the cradle of FIG. 4;

FIGS. 6A-6B show various views (front view and side view) of another voice memo reminder system;

FIG. 7 shows yet another voice memo reminder system;

FIG. 8 shows a flow chart of one start-up process for one voice reminder system;

FIG. 9 shows a flow chart of one wake-up from halt mode process for one voice reminder system;

FIG. 10 shows a flow chart of one scan button operation process for one voice reminder system;

FIG. 11A-11B shows a flow chart of one system locking process for one voice reminder system;

FIG. 12 shows a flow chart of one message playback process for one voice reminder system;

FIG. 13 shows a flow chart of one clock setting process for one voice reminder system;

FIG. 14 shows a flow chart of one message recording process for one voice reminder system;

FIG. 15 shows a flow chart of one message skipping process for one voice reminder system; and

FIG. 16 shows a flow chart of another message recording process for one voice reminder system.

### DETAILED DESCRIPTION OF THE INVENTION

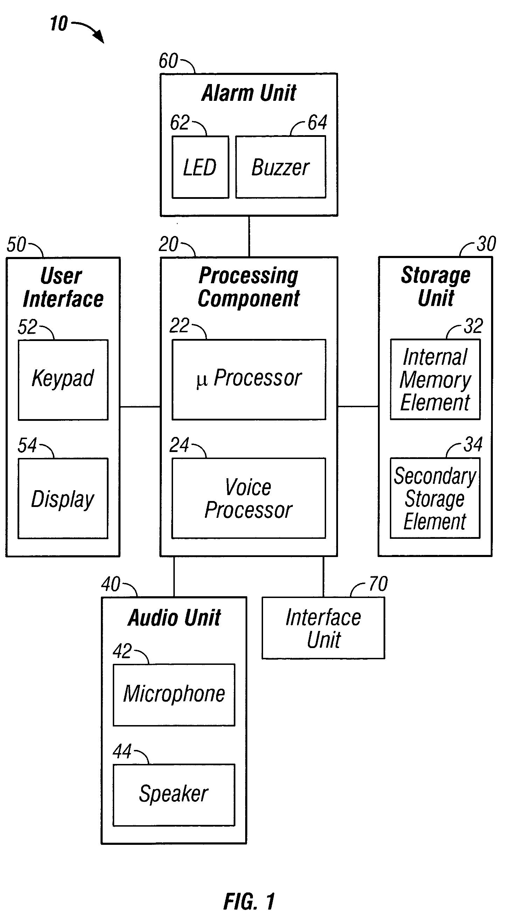

FIG. 1 schematically illustrates one voice memo reminder system 10. System 10 receives voice input, processes and stores the input as a message file, and then replays the recorded message at a time delay selected by a user. System 10 may additionally receive task input as textual data. These tasks are associated with message files to provide a title or label to such messages.

System 10 has a processing component 20 that includes a primary microprocessor 22, to provide overall internal control of system 10, and a voice processor 24, to digitize voice input received by system 10 for storage thereof. Voice processor 24 may be, for example, a model ISD4003 ChipCorder CMOS-based microprocessor of ISD/WindbondAudio. Primary microprocessor 22 may be, for example, a model SPLB21 8-bit CMOS microprocessor of Sunplus Technology Co. However, it is to be understood that processing component 20 may comprise a single microprocessor (not shown) performing combined functions of primary microprocessor 22 and voice processor 24. Message and associated task input are stored in storage unit 30. Although shown externally, storage unit 30 may be an internal memory element 32 within voice processor 24 as a matter of design choice. Storage unit 30 may also include a secondary storage element 34 (e.g., cache memory) connected with primary microprocessor 22 to store embedded software instructions for directing the operation of primary microprocessor 22. Alternatively, if voice processor 24 does not have internal memory element 32 - for example, if processor 24 is a digital signal processor (DSP) microchip - primary microprocessor 22 and voice processor 24 may share a single storage device (not shown), such as a non-volatile random access memory (NVRAM) unit, that stores both digitized voice data and embedded software instructions. Additionally, textual data associated with inputted tasks may be stored on either of internal memory element 32 or secondary storage element 34 as a matter of design choice.

Audio unit 40 has a microphone 42 for capturing voice data spoken near to system 10 and a speaker 44 for audibly replaying the message to the user at a time delay. Microphone 42 communicates with voice processor 24, which converts the voice data from analog to digital data for storage in storage unit 30. According to the time delay selected by the user at user interface 50, voice processor 24 will convert the stored digital data to analog for replay on speaker 44.

In one embodiment, user interface 50 includes a keypad 52 for entering commands into system 10 regarding the recording, playback, and scheduling of playback of messages. Display 54, e.g., a Liquid Crystal Display (LCD), presents information to the user about messages stored in storage unit 30 and times for scheduled message playback.

To inform the user of certain conditions regarding stored messages, alarm unit 60 has a visual indicator, such as an LED 62 and/or an audio indicator, such as a buzzer 64. LED 62 may be configured, for example, to illuminate when the user is presently recording a message, or when a message replay has been missed and not acknowledged. Buzzer 64 may produce audio output to inform the user, for example, that scheduled message replay will begin shortly, or that message replay has been missed and not acknowledged.

Optionally, system 10 includes an interface unit 70 for linking with an external device (not shown), to import and export files to and from storage unit 30. In one example, interface unit 70 imports digital or analog information, such as voice messages, from an external device (e.g., computer, tape recorder) that are then stored as tasks or messages within storage unit 30. In another example, interface unit 70 exports message or task data from storage unit 30 to the external device. Interface unit 70 may be, for example, a USB port, I/R port, or an audio jack.

Those skilled in the art should appreciate that processing component 20 may be one of several types of microprocessors, as a matter of design choice. Those skilled in the art should also appreciate that if voice processor 24 is not provided, other components such as A/D (analog/digital) and D/A (digital/analog) converters may be included within system 10, for example, to digitize voice data through microphone 42 and to replay voice recordings through speaker 44. Additionally, an internal battery (not shown) may provide electrical power for system 10.

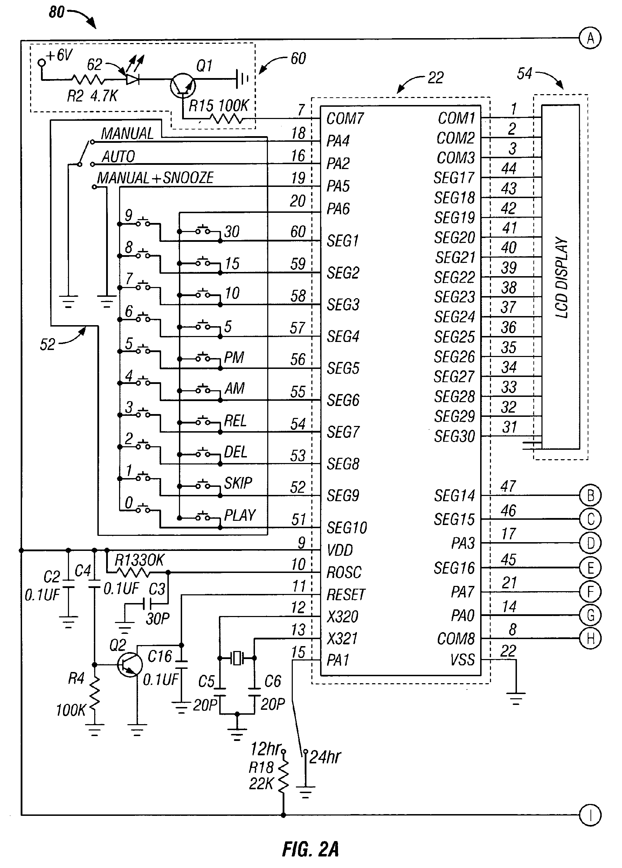

FIGS. 2A-2C show an exemplary circuital architecture 80 suitable for use with voice memo reminder system 10 of FIG. 1, in accord with one embodiment. By way of example, processing component 20 may be configured for processing a plurality of control signals, data signals and/or voice signals, and includes primary microprocessor 22, FIG. 2A, and voice processor 24, FIG. 2C. Architecture 80 typically includes power supply and condition circuitry 82 configured for supplying conditioned power to the various components of system 10, such as primary microprocessor 22 and voice processor 24.

Primary microprocessor 22 may be configured to process several control and/or data signals to operatively control certain components of system 10. For example, primary microprocessor 22 may direct voice processor 24 to record a message when the primary microprocessor 22 receives a control signal from user interface 50. As such, voice processor 24 may cooperatively record an incoming audio signal with audio unit 40.

In FIGS. 2A-2C, primary microprocessor 22 is coupled to voice processor 24 through a plurality of ports, such as segment registers SEG 15 and 16 and ports PA 0, 3, and 7. Primary microprocessor 22 may be coupled to audio unit 40 through segment register SEG 14 to controllably operate microphone 42 and speaker 44. Voice processor 24 may also be coupled to audio unit 40 to process audio signals of microphone 42 and speaker 44.

Audio unit 40 may include control circuitry 46 for controlling microphone 42 and speaker 44. For example, when directed by primary microprocessor 22, control circuitry 46, through bipolar junction transistor (BJT) Q6, may control microphone M1 of microphone 42 to receive an audio signal or control speaker SPK1 of speaker 44 to transmit an audio signal. Accordingly, voice processor 24 may process and store audio signals, when the microphone M1 is, for example, coupled to "analog in" port ANAIN of voice processor 24; speaker 44, when coupled to voice processor 24 at port AUDOUT, for example, may transmit audio signals as processed by the voice processor 24. Speaker 44 may have additional control circuitry such as switch HIGH/LOW and volume control 48 to condition the amplitude and quality of audio signals from voice processor 24.

Voice processor 24 may receive an audio signal from microphone 42 and digitize that signal. Once digitized, the signal may be stored in on-board memory, such as a NVRAM. Stored, digitized-audio signals may be processed from the on-board memory and converted back into analog by voice processor 24 for replay through speaker SPK1. Those skilled in the art should appreciate that other types of storage and processing may be used with system 10.

In FIG. 2A, user interface 50 may include keypad 52 and display 54. Keypad 52 may include two banks of switch connectors, the first bank labeled 0-9 and the second bank labeled PLAY, SKIP, DEL, REL, AM, PM, 5, 10, 15, and 30. As shown, the switch connectors may be coupled to segment registers SEG1-10 of primary microprocessor 22. For example, as a switch connector is depressed, a control signal may be generated and applied to the associated segment register to input a value of the switch connector to primary microprocessor 22. Additionally, keypad 52 may include a toggle switch, labeled MANUAL, AUTO, AND MANUAL + SNOOZE, for manually switching operational values to primary microprocessor 22 such that it operates in a particular mode. For example, switching the toggle switch to the MANUAL position may force primary microprocessor 22 to operate in a "manual" mode. Accordingly, switching the toggle switch in the AUTO and MANUAL + SNOOZE positions may, respectively, direct primary microprocessor 22 to operate in "automatic" and "manual snooze" modes.

Display 54 may be coupled to communication ports COM 1-3 of primary microprocessor 22 and to segment registers SEG 17-30. Primary microprocessor 22 may controllably operate display 54 to display information relevant to a user. For example, when directed by primary microprocessor 22, display 54 may display time and date information to the user.

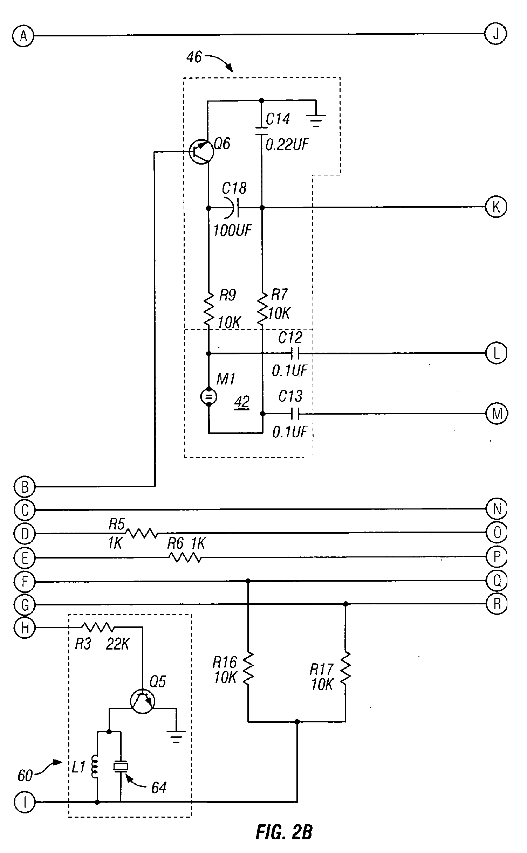

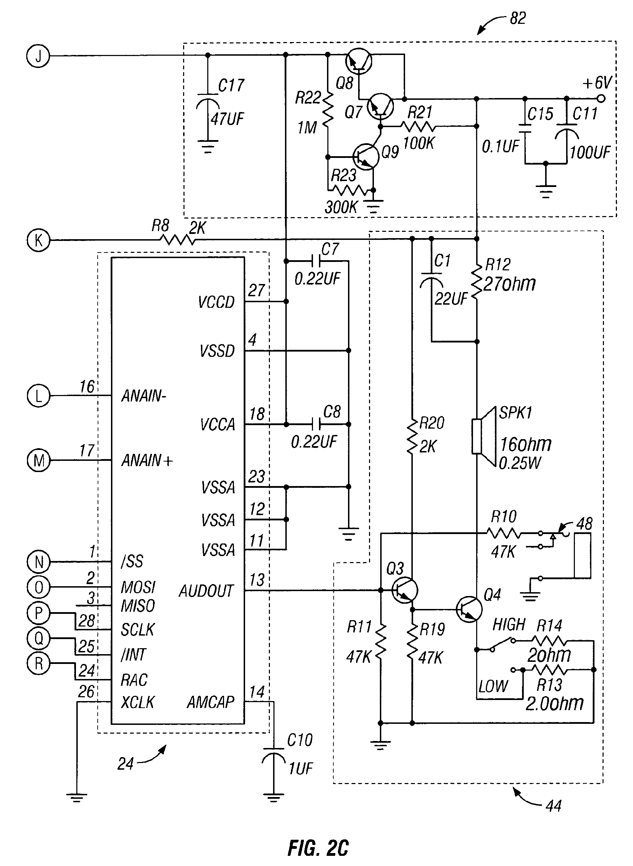

Alarm unit 60 may include LED 62 and buzzer 64. In FIGS. 2A and 2B, LED 62 and buzzer 64 may be coupled to communication ports of primary microprocessor 22, such as communication ports COM 7 and 8, respectively. When directed by primary microprocessor 22, LED 62 and buzzer 64 may alert a user to an event.

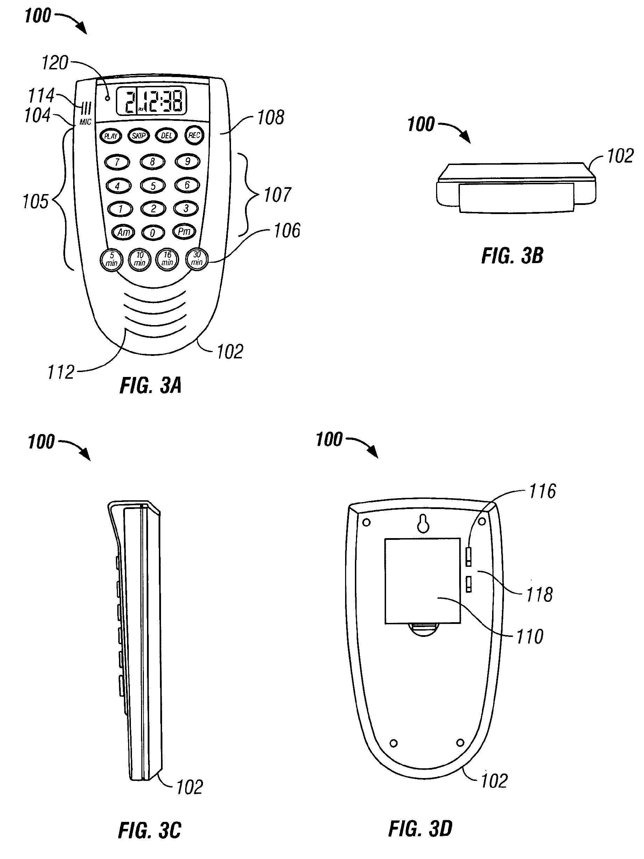

FIGS. 3A-3D show another voice memo reminder system 100. System 100 may for example include the electrical functions of system 10, FIG. 1, internal to a housing 102. System 100 has a user interface 104 in the form of an array of buttons 105 to allow a user to provide input for system functions. Buttons 105 of user interface 104 may include: function invoking buttons 108, such as message playback, skipping, deleting, and recording buttons, to manage stored voice messages according to individual preferences; alpha-numeric buttons 107 for inputting a desired date and time for message playback; and time delay buttons 106 initiated to immediately record voice data and stamp the data with a selected time delay (e.g., 30 minutes, 2 hours, etc.), the expiration of which causes the message to be played back to the user. Those skilled in the art should appreciate that the magnitude of the time delay is a matter of design choice; that is, one of buttons 106 may for example have a 1-day time delay. Also, it is to be understood that the term "time delay" for designating future message playback refers to both a set time delay chosen with time delay buttons 106 (e.g., 1 hour), or a future time and date for message playback chosen with alpha-numeric buttons 107 (e.g., 8:00 A.M., December 20th). A battery access port 110 provides user access to the internal battery (not shown). Exemplary positions for a speaker 112 and a microphone 114 are shown in FIG. 3A. However, those of skill in the art will appreciate that speaker 112 and microphone 114 positioning is a matter of design choice.

As can be seen in FIGS. 3A and 3C, housing 102 integrates the components of system 100 into a compact, monolithic hand-held unit. FIG. 3D depicts message handling switch 116 and volume switch 118. Switch 116 controls message-handling characteristics for messages being replayed by the system 100. Switch 116 may be set for automatic deletion of messages after playback thereof (i.e., automatic deletion) or automatic retention of messages after playback, with subsequent automatic playback occurring at a specific time delay (i.e., "snooze" function) or without playback at a specific time delay, but upon initiation by the user (i.e., manual deletion). The delay may be pre-programmed into system memory, or selected by the user in the same fashion as standard message playback. Exemplary volume setting for switch 118 may include low and high volume output for speaker 112. LED 120 may be provided to alert the user of certain activities of system 100, such as current message recording, missed message playback with no acknowledgement, or other system conditions.

Message handling switch 116 regulates message management as follows. When set for "automatic deletion", messages recorded with time delay buttons 106 (e.g., 30 minutes) are deleted automatically upon playback, and messages recorded for playback at a specific date and time selected with alpha-numeric buttons 107 (e.g., 9:00 A.M., December 17th) are retained and deleted only upon initiation of a "DEL" or delete button 108. When set for "manual deletion", messages recorded with both time delay buttons 106 and alpha-numeric buttons 107 are retained upon playback, and only subsequently deleted upon initiation of the delete button either during message playback, or for example within 5 seconds thereafter. Finally, when set for the "snooze function", messages recorded with either of time delay buttons 106 or alpha-numeric buttons 107 may be acknowledged and retained upon playback by initiating any button 105 (except the delete button 108) within 5 seconds of such playback; such messages may alternatively be deleted upon playback by initiating the delete button within 5 seconds of such playback. If no button is initiated within 5 seconds of message playback, LED 120 illuminates (e.g., constant illumination or flash on/off) to inform the user that a message was missed. The user may then initiate message playback to replay the missed message or select the delete button to discharge the message.

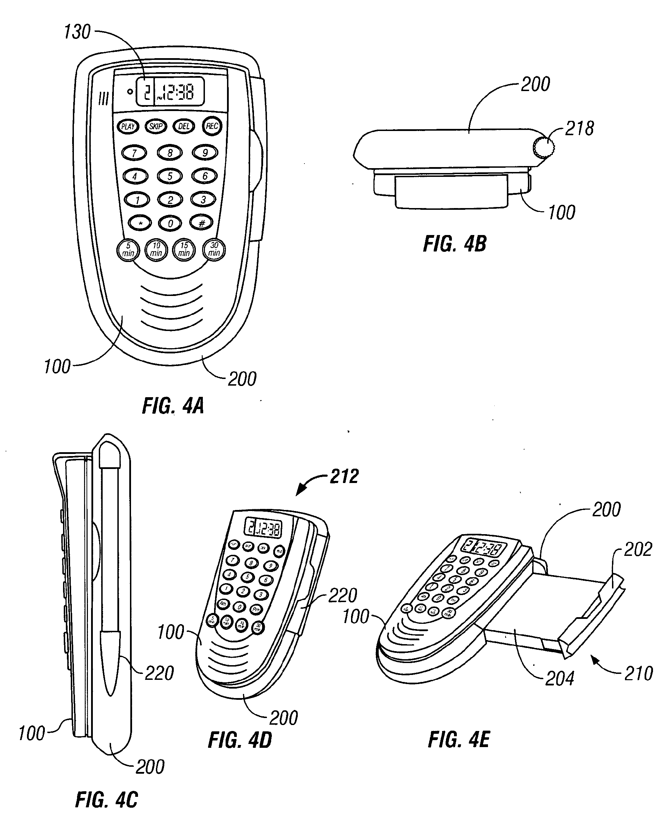

FIGS. 4A-4E show system 100 coupled with a cradle 200, in accord with one embodiment. Preferably, system 100 snaps to cradle 200 through a physical connection between system housing 102 and a mating element of cradle 200. Cradle 200 includes a memo pad storage unit 202 slidably mounted therein, wherein paper 204 may be accessed and written on, if desired, by a user. As shown in FIG. 4E, memo pad storage unit 202 extends from cradle 200 when in use; conversely, when not in use, storage unit 202 stores within cradle 200 as shown in FIG. 4D. A pen socket 220 may be included within cradle 200, to store a pen therein. A display screen 130, e.g., an LCD display, may show various states for any of the functions described herein. For example, display screen 130 in FIG. 4A shows the total number of messages stored by system 100 and the current time. However, display screen 130 may also show the index number associated with a message currently being replayed, the current date, the selected playback date and/or time for the message number selected, among other system information.

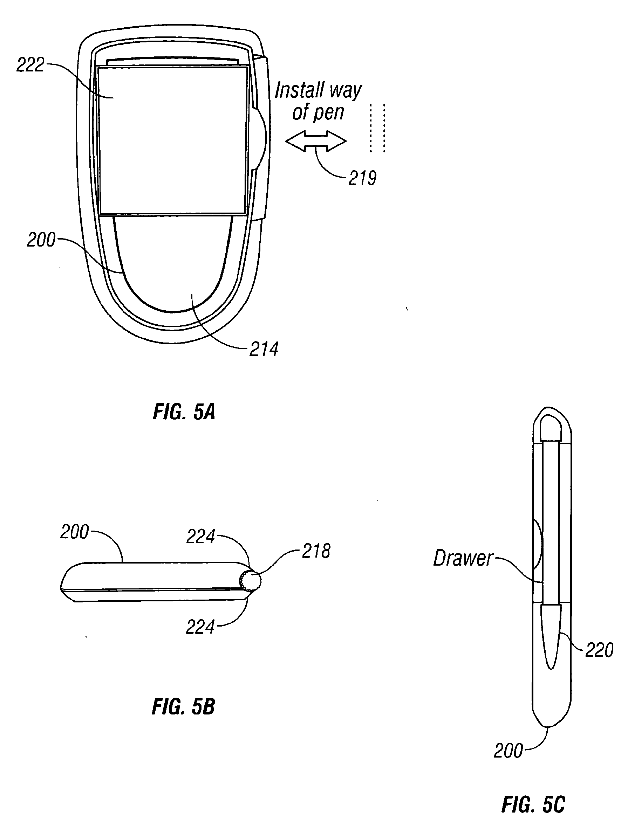

FIGS. 5A-5C show further features of cradle 200, including a recessed area 214 which stores memo pad storage unit 202 within the dimensions of cradle 200, and pen socket 220. A pen 218 is shown as stored with cradle 200 in FIG. 5B. An arrow 219 indicates how pen 218 is attached or "snapped" into, or pulled out of, pen socket 220, as shown in FIG. 5A. Alternatively, socket 220 may be sized and configured such that pen 218 is inserted therein and removed therefrom longitudinally from above, with lips 224 securing the position of pen 218. FIG. 5A further shows a specific location 222, where memo pad storage unit 202 fits within cradle 200 to store paper 204 therein.

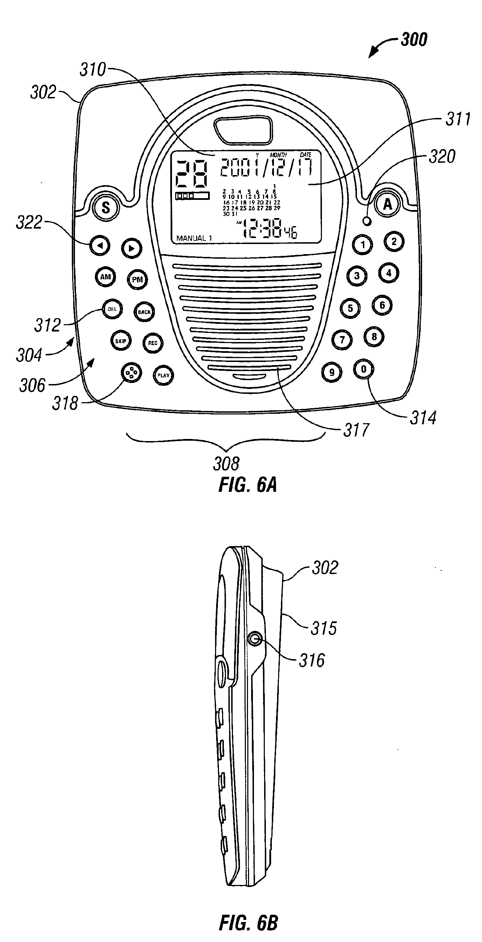

FIGS. 6A and 6B show another voice memo reminder system 300. System 300 may include the electrical functions of system 10, FIG. 1, internal to a housing 302. FIG. 6A shows an exemplary layout for a user interface 304 comprised of a keypad 306 having an array of buttons 308 for providing system input, and a display screen 310, e.g., a LCD display. Buttons 308 of user interface 304 may include: function invoking buttons 312, such as message playback, skipping (i.e., forward or reverse skipping), deleting, and recording buttons, to manage stored voice messages according to individual preferences; and alpha-numeric buttons 314 for inputting a desired date and time for message playback. Each function invoking button 312 may be associated with one or more functions performed by system 300, the number of functions depending on whether the individual button has fixed or dynamic functionality. For example, one button 312 may designate whether a time entered for message playback is an "A.M" or "P.M.", and also control security locking of the keypad 306 to prevent unauthorized use. A battery access port (not shown) is preferably located on a back surface 315 of housing 302, to provide user access to the internal battery (not shown). To allow for hand-held use and easy transportation of system 300 with or on the user, housing 302 for system 300 may be configured to have overall dimensions of less than about 140mm in width, 140mm in height, and 25mm in thickness. FIG. 6B shows the low profile nature of housing 302. An interface unit 316, which may be interface unit 70 of FIG. 1, shown as an audio jack, facilitates the exporting of audio messages and associated data stored in storage unit 30 to another device (e.g., a computer or cassette recorder). A speaker 317 and a microphone 318 are positioned as shown in FIG. 6A; however, those of skill in the art will appreciate that speaker 317 and microphone 318 positioning is a matter of design choice. A LED 320 may be provided to alert the user of certain activities of the system 300, such as current message recording, missed message playback with no acknowledgement, or other system conditions. System 300 may also have a message handling switch (not shown) and volume switch (not shown) with the same functionality as switches 116, 118 of system 100, and integrated with housing 302.

Display screen 310 may display the current date, time, and one of a number of message characteristics (e.g., total number of messages stored, current message number being played, number of messages missed, bar graph representation of the degree of message memory fullness, etc.). Preferably, display 310 is further configured to display a calendar matrix 311 through which a specific date may be selected for the playback of a stored message. The calendar matrix 311 may be continuously displayed, or the matrix mode may be toggled into and out of with the initiation of a designated button 308. Specific function buttons 312, such as arrow buttons 322, may be used to navigate the calendar matrix grid to arrive at a specific date for selection; a marker or other visual cue (e.g., "highlighted" or shaded cursor box) can be moved across the number matrix such that the user sees what specific date is selected. Once the user sets the date on the matrix 311, the playback time on that date is set with alpha-numeric buttons 314 and a message may be recorded. Upon completion of recording, the selected date on the matrix 311 may become shaded or "highlighted" to indicate that a message is to be played back on that date. The calendar matrix 311 may also be pre-programmed with indicators for standard holidays (e.g., by shading on the calendar or an audio announcement).

As another feature, the display screen 310 of system 300 may be configured with a portion having a PDA-type touch screen interface (not shown) that will accept input through handwriting thereon with a stylus. Screen 310 registers the writing, and a signal is generated which is converted by the microprocessor 22 to digital data that may be stored in storage unit 30 as task data associated with a particular message. The touch screen interface also allows for the use of the stylus to select a specific date on the calendar matrix 311. If the user has inputted task data into system 300 in association with a particular audio message, and the date upon which the message is to be replayed is selected on the calendar matrix 311, such task (e.g., message title or label) will be displayed on screen 310 adjacent to calendar matrix 311. This reminds the user of the contents of the message that is to be replayed on that particular date. The task data may be entered into the system through microphone 318; a portion of the message entered may be converted to a text component for indexing and display as a task, or the user may enter a text component with alpha-numeric buttons 314 in association with recording the message. Still further, tasks may be entered by another means (e.g., externally by interface unit 316, or by handwriting onto the touch screen interface). The tasks are preferably presented to the user in a drop-down list on screen 310 when the user selects a specific date on calendar matrix 311; selection of a particular indexed task from the list (e.g., with a stylus or scrolling with arrow buttons 322) will initiate playback of the audio message associated with the task.

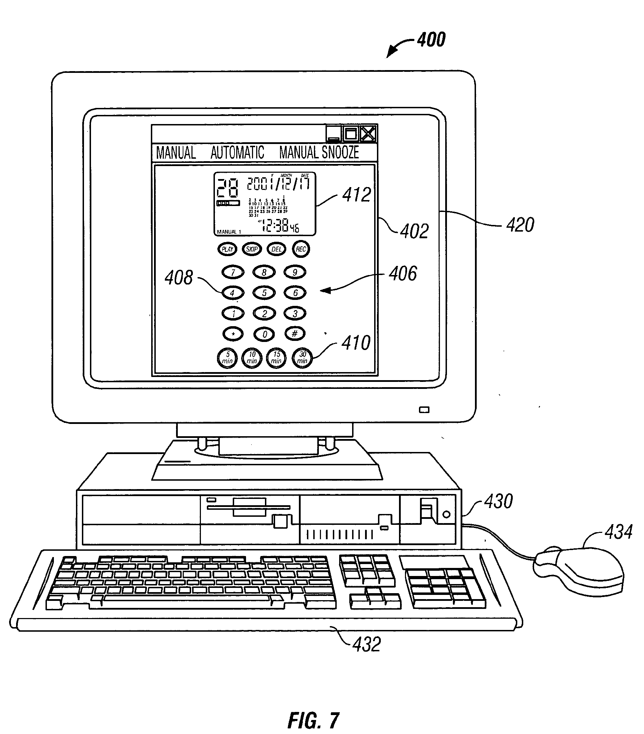

Another voice memo reminder system 400 is shown in FIG. 7, for use with a personal computer 430. System 400 may have functionality similar to systems 100, 300, of FIGS. 3 and 6, respectively, and may include the electrical functions of system 10 of FIG. 1. Data of system 400 is presented to the user as a software graphical user interface (GUI) 402 on a display screen 420 of personal computer 430. The processing components, storage units and audio units of personal computer 430 may run the operation of, and perform the functions inputted on, GUI 402.

A module residing within computer 430 may provide for a user interface similar to user interfaces 104 of FIG. 3A and 304 of FIG. 6A, but may have a on-screen keypad 406 formed directly into GUI 402 displayed on computer screen 420. GUI 402 may display, similar to system 300, the current date, time, and one of a number of message characteristics (e.g., total number of messages stored, current message number being played, number of messages missed, bar graph representation of the degree of message memory fullness, etc.), as well as a calendar matrix through which a specific date may be selected for the playback of a stored message. Various buttons 408 may be provided on keypad 406 with the same functionality as buttons 105 and 308 of FIGS. 3A and 6A, respectively, including message playback, skipping (i.e., forward or reverse skipping), deleting, and recording buttons, to manage stored voice messages according to individual preferences; buttons 408 may further include time delay buttons 410 initiated to immediately record voice data on computer 430 and stamp the data with a selected time delay (e.g., 30 minutes, 2 hours, etc.). Alphanumeric data may be entered into text boxes 412 of the GUI 402 so that a desired date and time for message playback may be chosen. Input on buttons 408 and time delay buttons 410, as well as in text boxes 412 may, for example, be initiated by keystrokes on a keyboard 432 of computer 430, or by selecting items with a mouse 434 of computer 430 (e.g., clicking on the desired button 408, 410 on screen 420). Alternatively, voice-recognition software and a microphone may be provided with computer 430 such that keypad 406 and/or text boxes 412 may be unnecessary for system 400 and commands and message playback times may be selected through voice commands. In one embodiment, the user may select different operating modes of system 400, such as "manual", "automatic" and "manual snooze" modes.

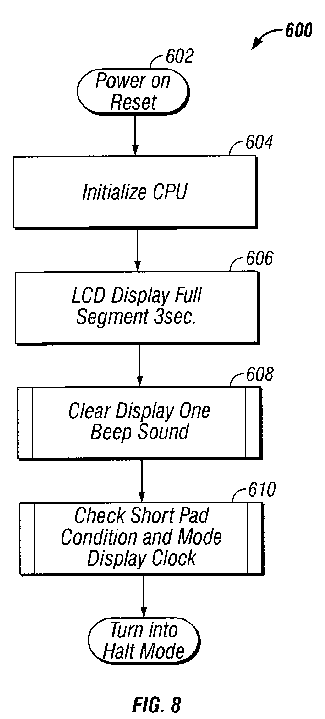

FIG. 8 shows one start-up process 600 for systems 100, 300. The user will turn on the systems 100, 300 by initiation of designated buttons 105, 308, in step 602. Primary microprocessor 22 is then initialized 604 and the LCD segments of display screens 130, 310 fully illuminate 606. The user is informed of systems 100, 300 powering on by an audible beep in step 608 and the clearing of display screens 130, 310. Input buttons 105, 308 are then checked by systems 100, 310 to ensure proper functionality and no short circuits, and the current time is displayed, in step 610. Systems 100, 300 then enter halt mode to await further instructions for the user.

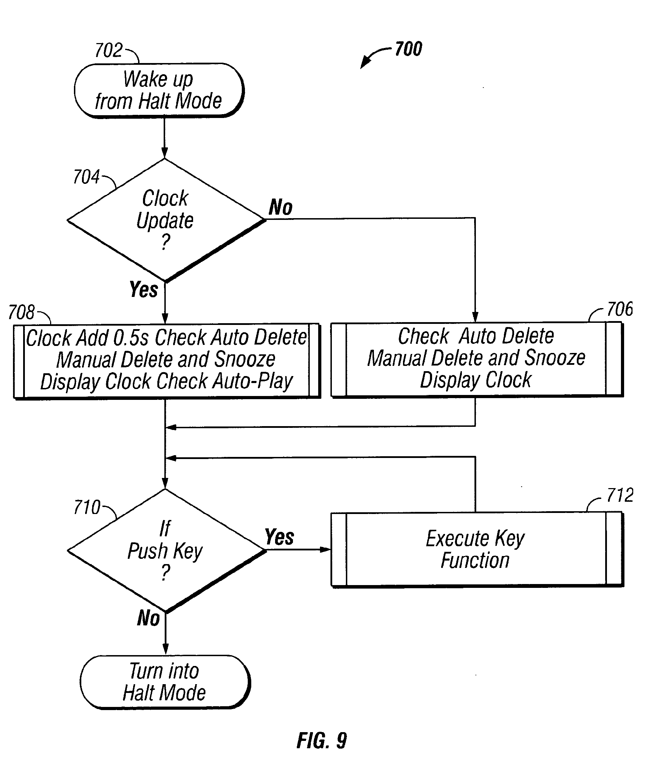

One wake-up process 700 is shown in FIG. 9. Systems 100, 300 awake from halt mode 702 and a determination is made as to whether there is to be a clock update, in step 704. If not, systems 100, 300 check the message handling functions (i.e., automatic deletion of messages, manual deletion of messages, snooze function) and display the clock on display screens 130, 310, in step 706. If yes, systems 100, 300 add 0.5 seconds to the clock, check the message handling functions, display the clock, and check to see if a message playback time has been reached or passed 708. Subsequently, systems 100, 300 determine whether any button or buttons 105, 308 have been initiated 710; if yes, then the function associated with the button is executed 712, and the determination of button initiation continues until no buttons are initiated for a certain amount of time (e.g., 1 minute); if no buttons 105, 308 have been initiated, or if button initiation has ceased, systems 100, 300 return to halt mode.

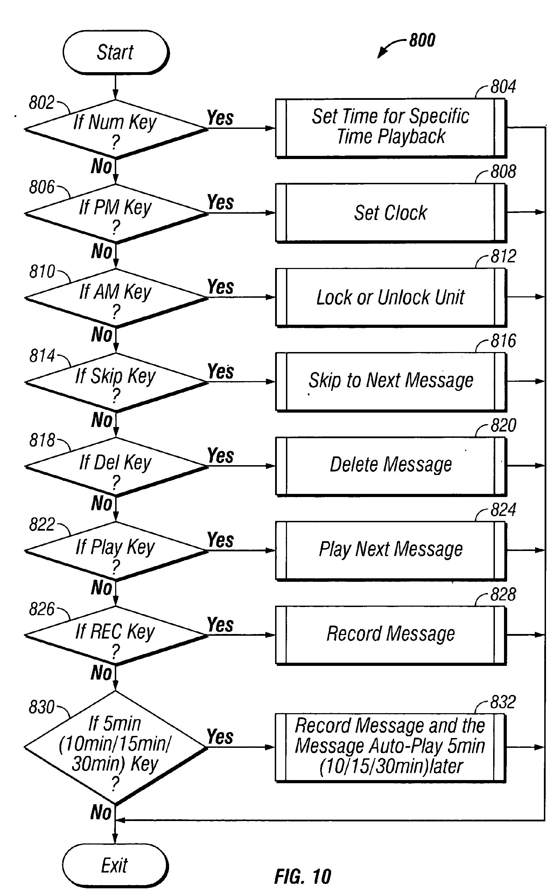

One button or button scan operation process 800 is shown in FIG. 10. A determination is made, in step 802, based on the kind of buttons 105, 308 initiated by the user: if alpha-numeric buttons 107, 314 are depressed, systems 100, 300 may receive 804 an inputted time for message playback, which is followed by the user selecting "AM" or "PM" and holding a record button for recording; if instead a "PM" button is depressed and held 806, systems 100, 300 may receive 808 a clock set time from the user; if instead an "AM" button is depressed and held 810, systems 100, 300 may be locked or unlocked from the locked state in step 812 to restrict unauthorized usage thereof; if instead a skip button is depressed 814, the current message slated for replay is skipped 816 either forward or backwards to the next message; if instead the delete button is depressed 818, the current message being replayed is deleted 820. In step 822, if instead the play button is depressed, systems 100, 300 will begin playback 824 of stored messages; if instead the record button is depressed and held 826, systems 100, 300 will begin recording 828 of a message with no specific playback time - the user will hold the record button continuously until the message is finished recording and LEDs 120, 320 will preferably be illuminated during such time. Finally, in step 830, if instead a time delay button 106 is depressed and held, the user will hold the time delay button continuously until a message is finished recording, at the releasing of which the message is stored for playback at the selected time delay according to the specific button 106 initiated (e.g., 30 minutes, 1 hour, etc.).

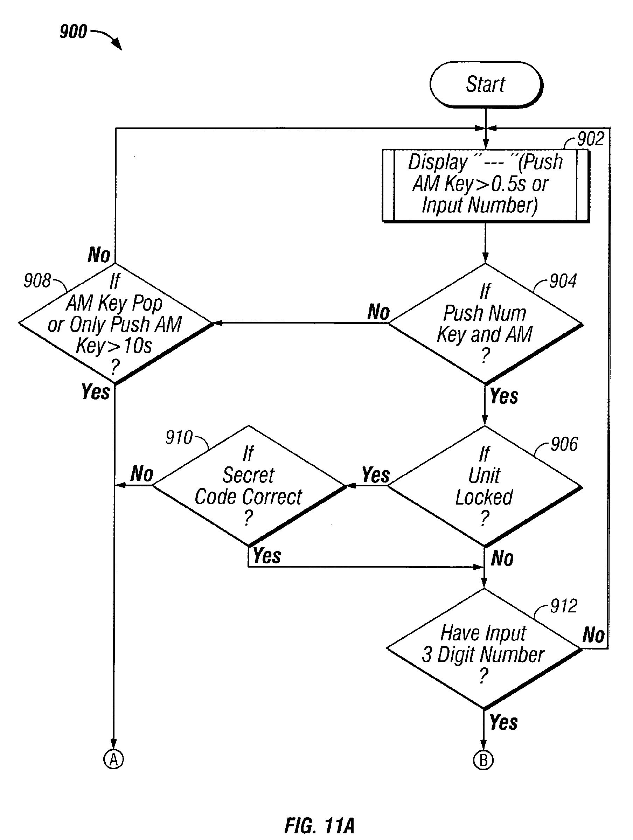

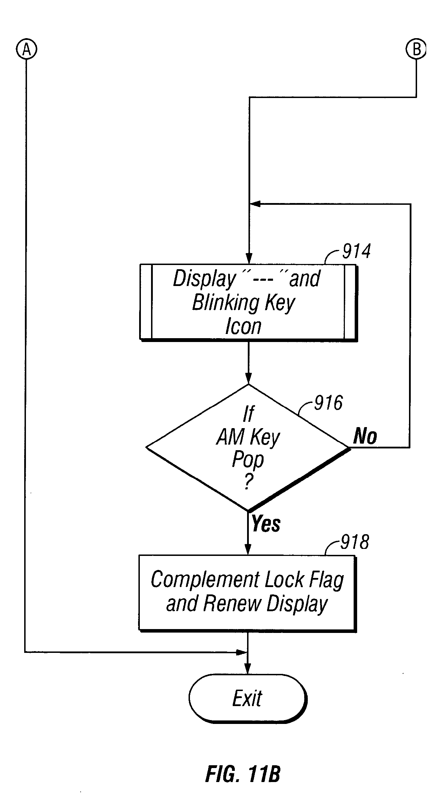

One process 900 for temporary locking of systems 100, 300 to prevent unauthorized access is shown in FIGS. 11A-11B. In step 902, display screens 130, 310 show a dashed line to indicate either depression of the "AM" button for >0.5 seconds or initiation of a number with alpha-numeric buttons 107, 314. A determination is made as to whether the "AM" button and an alpha-numeric button are both being depressed, in step 904. If so, a determination is made as to whether systems 100, 300 are in the locked mode 906. If not, systems 100, 300 determine whether the "AM" button is no longer depressed or was depressed for longer than 10 seconds, in step 908. If so, locking process 900 is then exited in FIG. 11B. If not, the process is returned to step 902. Returning to step 906, if systems 100, 300 are locked, an inquiry is made as to whether the correct code was inputted with alpha-numeric buttons 107, 314, in step 910. If systems 100, 300 are not locked, a determination is made as to whether a 3 digit number was entered, in step 912. In step 910, if the secret code entered is not correct, locking process 900 is then exited in FIG. 11B with systems 100, 300 remaining locked from unauthorized use. If the code is correct, the process proceeds to step 912. If the user has inputted a 3 digit number - either to lock or unlock the unit depending on whether systems 100, 300 were previously locked or unlocked - then display screens 130, 310 show in step 914 of FIG. 11B a blinking dashed line icon. If the number inputted is not a 3 digit number, the process is returned to step 902. From step 914, an inquiry is made as to whether the "AM" button has been released 916. If so, systems 100, 300 will store 918 a lock flag if the system is in the locked state and the process will repeat to unlock the unit. If not, the blinking dashed line icon at step 914 will be continuously displayed unit the "AM" button is released, allowing process 900 to proceed to step 918.

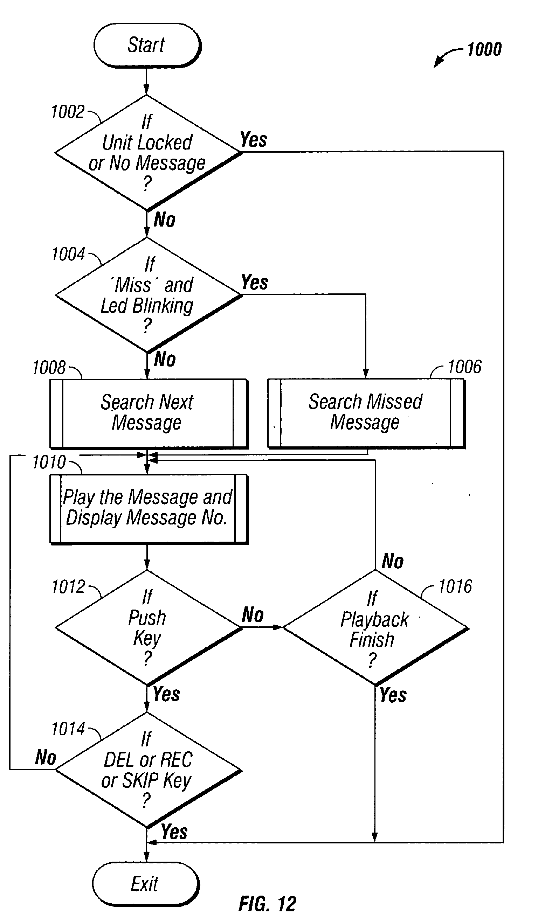

One process 1000 for playing messages stored in storage unit 30 of systems 100, 300 are shown in FIG. 12. First, systems 100, 300 determine 1002 whether a locked mode is current or whether messages are present. If yes, process 1000 is exited; if no, a determination is made as to whether a message playback was missed and not acknowledged 1004. If there was no acknowledgment (i.e., missed message), systems 100, 300 search for the missed message, in step 1006. If there was acknowledgment (i.e., no missed message), systems 100, 300 will search for the next message in storage unit 30 at step 1008. The user may then initiate 1010 playback of the message and a message number corresponding with that message will be displayed. Systems 100, 300 then determine whether one of the functions invoking buttons 108, 312 have been depressed 1012; if so, process 1000 continues to step 1014, where it is determined if the button depressed was a delete ("DEL"), record ("REC"), or skip ("SKIP") function invoking buttons. If not, in step 1016, systems 100, 300 inquire as to whether playback of the message is finished. If playback is finished, process 1000 is exited. If not, the process is returned to step 1010. In step 1014, if one of the delete, record or skip function invoking buttons are depressed, process 1000 is then exited. If not, the process is returned to step 1010.

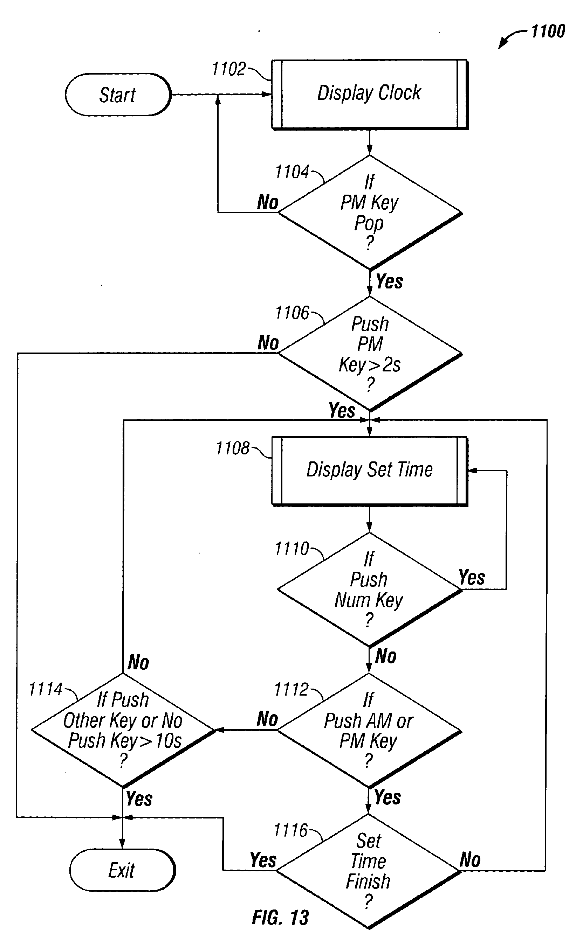

FIG. 13 shows one clock setting process 1100 for systems 100, 300. Display screens 130, 310 present the current time kept by the clock, in step 1102. Determination of whether the "PM" is initiated then occurs in step 1104. If the "PM" button is not initiated, then the time displayed is not changed. If the "PM" button is initiated, then it is determined whether the button is depressed 1106 for >2 seconds. If not, then process 1100 is exited. If so, the currently set time is displayed 1108 and a determination is made if alpha-numeric buttons 107, 314 have been initiated 1110. If so, the chosen values are displayed in step 1108 until the time has been selected. If not, or once time selection has finished, systems 100, 300 inquire 1112 as to whether an "AM" or "PM" button has been selected for the inputted time. If not, another determination is made if another button besides the "AM" or "PM" buttons have been depressed, or if no button is pushed for >10 seconds, in step 1114. If either the "AM" or "PM" button was depressed, systems 100, 300 determine whether the user is finished setting the time, in step 1116. Returning to step 1114, if another button besides the "AM" or "PM" buttons were depressed, or if no button is pushed for >10 seconds, process 1100 then exits; otherwise, process 1100 returns to step 1108. Returning to step 1116 if the user has not finished setting the time, process 1100 returns to step 1108 and the set time is displayed. Otherwise, process 1100 is exited.

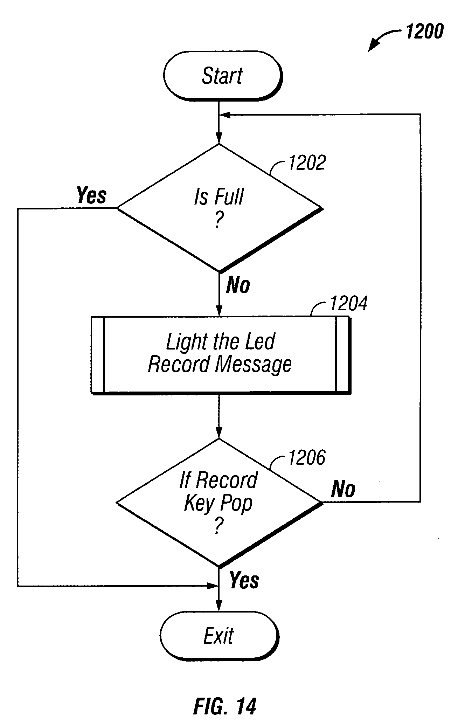

One message recording process 1200 is shown in FIG. 14, preferably for use with time delay buttons 106. First, it is determined whether storage unit 30 memory is sufficient to store additional messages, in step 1202. If storage unit 30 is full, then process 1200 is exited. If not, upon user initiation of the recording through the appropriate buttons 105, 308, LEDs 120, 320 will preferably illuminate while the recording 1204 takes place. System 100, 300 will then determine 1206 if the appropriate recording buttons 105, 308 have been released. If not, recording continues at step 1202 mindful of the fullness of the storage unit 30; if so, the message is stored in storage unit 30 and process 1200 is exited.

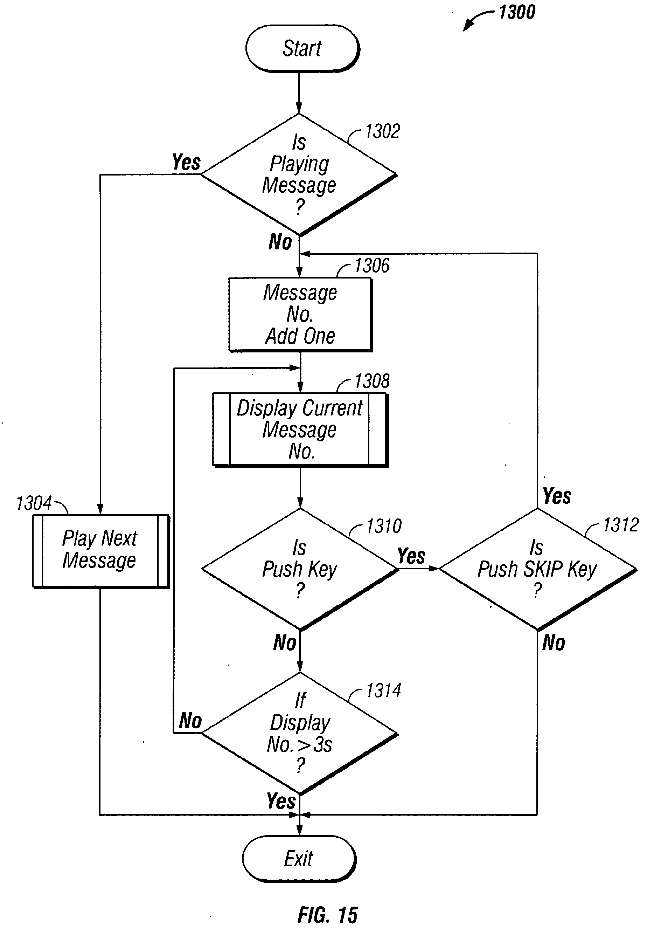

FIG. 15 shows one process 1300 for skipping through the playback of messages stored on systems 100, 300. In step 1302, a determination is made if systems 100, 300 are currently playing a message. If so, upon completion of the message, the next message is played 1304 without initiation of the skip button and skipping process 1300 is exited. If not, then the message number displayed is incremented 1306 by adding one and the new, current number is displayed 1308. Subsequently, an inquiry is made as to whether a button has been pushed, in step 1310. If so, then another inquiry is made if the skip button was the specific button pushed, in step 1312. If no button has been pushed, a determination is made if the message number has been displayed for >3 seconds, in step 1314. Returning to step 1312, if the skip button was pushed, then step 1306 is reentered and the message number is incremented by one, resulting in playing of the next message. If the skip button was not pushed, process 1300 exits. Returning to step 1314 if the message number was displayed for >3 seconds, process 1300 exits. If not, then step 1308 is reentered and the current message number is displayed.

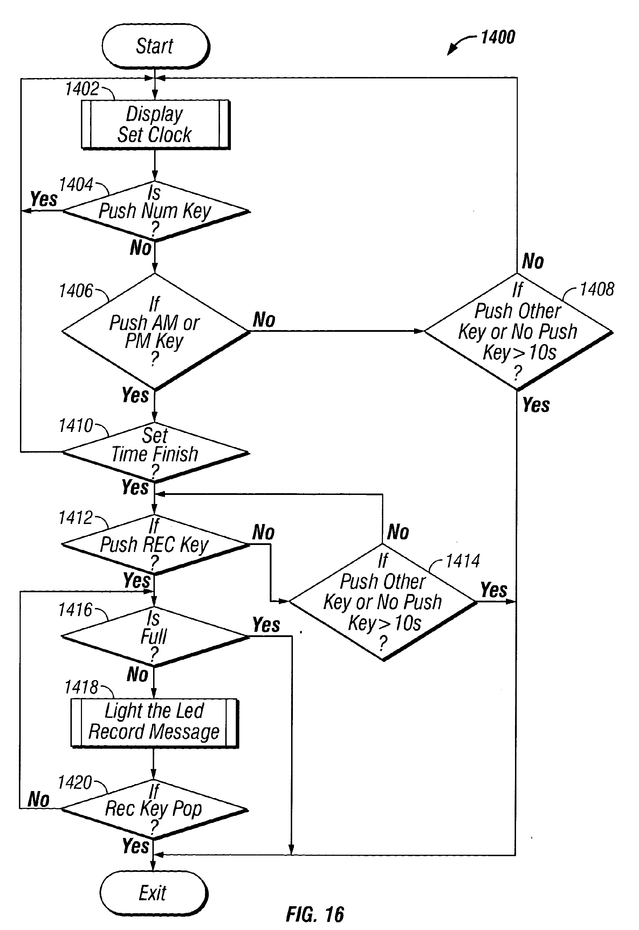

Another message recording process 1400 is shown in FIG. 16, preferably for use with message playback times set with alpha-numeric buttons 107, 314. Display screens 130, 310 present the time kept by the clock, in step 1402, until alpha-numeric buttons 107, 314 are initiated for inputting a message playback time. Determination of whether alpha-numeric buttons 107, 314 are initiated then occurs at step 1404. If such alpha-numeric buttons 107, 314 are initiated, then process 1400 returns to step 1402 for setting of the desired playback time. Otherwise, if button initiation is completed, systems 100, 300 inquire 1406 as to whether an "AM" or "PM" button has been selected for the inputted time. If not, another determination is made if another button besides the "AM" or "PM" buttons have been depressed, or if no button is pushed for >10 seconds, in step 1408. If either the "AM" or "PM" button is depressed, systems 100, 300 determine whether the user is finished setting the time, in step 1410. Returning to step 1408, if another button besides the "AM" or "PM" buttons is depressed, or if no button is pushed for >10 seconds, process 1400 exits; otherwise, process 1400 returns to step 1402. Returning to step 1410, if the user has not finished setting the time, process 1400 returns to step 1402 and the set time is displayed. Otherwise, if the user has finished with setting the time, systems 100, 300 inquire 1412 as to whether the "REC" or record button has been selected for recording a message. If not, a determination is made if another button besides the "REC" button has been depressed, or if no button is pushed for >10 seconds, in step 1414. If the "REC" button is depressed, systems 100, 300 determine whether the system storage unit 30 is sufficient to store additional messages, in step 1416. Returning to step 1414, if another button besides the "REC" button is depressed, or if no button is pushed for >10 seconds, process 1400 exits; otherwise, process 1400 returns to step 1412. Returning to step 1416, if system storage unit 30 is full, then process 1400 is exited. If not, upon user initiation of the recording through the appropriate buttons 105, 308, LEDs 120, 320 preferably illuminate while the recording 1418 takes place. Systems 100, 300 then determine 1420 if the appropriate recording buttons 105, 308 have been released. If not, recording continues in step 1416 mindful of system storage unit 30; if so, the message is stored in storage unit 30 and process 1400 exits.

Since certain changes may be made in the above methods and systems without departing from the scope hereof, it is intended that all matter contained in the above description or shown in the accompanying drawing be interpreted as illustrative and not in a limiting sense. It is also to be understood that the following claims are to cover certain generic and specific features described herein.

## Claims

1. A system for generating voice memo reminders, comprising:
a user interface for initiating capture of voice messages according to a selected time delay;
a microphone for sensing voice messages;
a speaker for audibly replaying voice messages;
a microprocessor for storing the messages into digital memory and for processing audible replay of individual stored voice messages according to the time delay of the individual stored voice messages.

2. The system of claim 1, further comprising solid-state memory for storing digital representations of the voice messages.

3. The system of claim 1, the user interface comprising one or more buttons for selecting a record function of the system, to record a voice message, and for simultaneously selecting a replay of the voice message at a selected time delay.

4. The system of claim 1, further comprising a housing for integrating the user interface, microphone, speaker and microprocessor as a monolithic, hand-holdable unit.

5. The system of claim 1, further comprising an interface unit for interfacing with external devices, wherein one or more of voice messages or tasks generated external to the system may be stored within the memory for later playback by the system.

6. The system of claim 1, further comprising an interface unit for transferring one or more of audio messages or digital message data from the digital memory to an external device.

7. The system of claim 1, the user interface comprising a keypad for entering one or more messages into the memory for later playback by the system.

8. The system of claim 1, further comprising a display screen for displaying at least one of the number of messages stored into memory, the current time, and a selected time delay for message replay.

9. The system of claim 8, wherein the display screen displays a calendar matrix for selecting a specific date for replaying a recorded message on the specific date.

10. The system of claim 9, wherein the calendar matrix displays the specific date having message playback scheduled thereon with a marker to differentiate the scheduled date having scheduled message playback from a date of the calendar matrix without a scheduled message playback.

11. The system of claim 8, wherein the display screen is a touch screen interface that senses touching by the user to initiate input into the system.

12. The system of claim 1, further comprising an illuminator providing a light source to indicate when a user has failed to acknowledge the replaying of a voice message by the system.

13. The system of claim 12, the illuminator being an LED.

14. The system of claim 1, further comprising a cradle for selective attachment to the system, the cradle having a memo pad storage unit that extends from, or alternatively retracts within, the cradle to access, or alternatively store, paper.

15. The system of claim 14, the cradle forming a housing with a pen socket, wherein a pen may be snapped into, or alternatively removed from, the socket.

16. The system of claim 14, the storage unit operating as a drawer for movement into and out of the cradle when manipulated by the user.

17. The system of claim 1, the microprocessor being responsive to user commands to re-replay one of the individual stored voice messages with a snooze delay.

18. The system of claim 1, the microprocessor being responsive to user commands to unlock replay of stored voice messages, to shield unauthorized replay of the messages.

19. A voice memo reminder device, comprising:
a first set of input buttons for selecting a message handling function of the system;
a second set of input buttons for selecting time delay for replay of a specific voice message;
a microphone for sensing voice messages;
a speaker for audibly replaying voice messages;
a microprocessor for storing the messages into digital memory and for processing audible replay of individual stored voice messages through the speaker according to the time delay of the individual stored voice messages; and
a housing for integrating the first and second set of input buttons, the microphone, the speaker, and the microprocessor into a monolithic body.

20. The device of claim 19, each of the first set of input buttons initiating a function on the device associated with one of the playback of a message, forward or backward skipping of a message, recording of a message and deletion of a message.

21. The device of claim 19, each of the second set of input buttons initiating a function on the device associated with the time delay replay of a voice message at a specific interval of one of 15 minutes, 30 minutes, 45 minutes, 60 minutes, 2 hours, 3 hours, 4 hours, 5 hours, 6 hours, 12 hours, 1 day, 2 days, 3 days, 4 days, 5 days, 6 days, 1 week, 2 weeks, 1 month, ½ year, and 1 year.

22. The device of claim 19, wherein the second set of input buttons comprises buttons associated with a set of integers, the integers configured for selection of a specific date and time for the time delay replay of a specific voice message.

23. The device of claim 19, further comprising a message handling switch for selection of message retention characteristics of individual stored voice messages upon replay of such messages.

24. The device of claim 23, wherein the message handling switch can be set for automatic deletion of messages after playback of such messages, automatic retention of messages after playback of such messages, or automatic retention of messages after playback of such messages with subsequent automatic playback of such messages occurring at a specific time delay.

25. A method for storing voice messages and for selectively replaying the messages at a preset time delay, comprising the steps of pressing one of several buttons on a hand-held voice memo reminder system, to initiate voice recording and to time tag the voice recording with a time delay, and audibly replaying the voice recording automatically after the time delay.

26. The method of claim 25, the step of pressing comprising selecting one of several buttons associated with one of 15 minutes, 30 minutes, 45 minutes, 60 minutes, 2 hours, 3 hours, 4 hours, 5 hours, 6 hours, 12 hours, 1 day, 2 days, 3 days, 4 days, 5 days, 6 days, 1 week, 2 weeks, 1 month, ½ year, 1 year, the voice message being replayed at the selected time delay of the one button.

27. The method of claim 25, further comprising entering a time to the system, the time defining the time delay selectively by the user.

28. The method of claim 25, further comprising locking the messages within internal memory until a correct access code is provided.

29. The method of claim 25, further comprising the step of re-replaying one or more of the voice messages in response to a user snooze command.

30. The method of claim 25, further comprising selecting on the system a message handling characteristic for replayed messages, the characteristic consisting of one of automatic deletion of a voice message after such message is replayed, automatic retention of a voice message after such messages is replayed, or automatic retention of a voice message after such message is replayed with automatic re-replaying of such message occurring at a specific time delay.

31. The method of claim 25, further comprising displaying the number of voice messages stored on the system and at least one of a current time and a selected time delay for message replay.

32. The method of claim 25, further comprising displaying a calendar matrix for selecting a specific date for one of replaying a recorded message on the specific date and displaying a list of a portion of stored messages files in text format scheduled for replay on the specific date.

33. The system of claim 32, wherein the step of displaying a calendar matrix further comprises displaying the specific date having message playback scheduled thereon with a marker to differentiate the specific date having the scheduled message playback from a date of the calendar matrix without a scheduled message playback.

34. A system for receiving analog messages and generating analog reminders, comprising:
a user interface configured for receiving user input to program capture of the analog messages and playback of the analog reminders; and
a processing element communicatively coupled to the user interface for processing control signals generated by the user interface to digitize the analog messages, store digitized messages, and generate the analog reminders from the digitized messages for playback according to a programmed time of the user input.

35. The system of claim 34, further comprising:
a microphone configured for receiving the analog messages; and
a speaker configured for generating the analog reminders.

36. The system of claim 35, the processing element comprising:
a voice processor coupled to the microphone for digitizing the analog messages and coupled to the speaker for playback of the analog reminders, the voice processor generating the analog reminders from stored digitized messages; and
a microprocessor communicatively coupled to the user interface for processing the control signals to program and control operations of the voice processor.

37. The system of claim 36, further comprising a storage device configured for storing the digitized messages and software instructions.

38. A method for capturing voice messages on a personal computer and for selectively replaying the messages at a preset time delay, comprising the steps of:
selecting a time for voice message playback through a graphical user interface of the personal computer;
initiating, through the graphical user interface, the recording of a voice message by the personal computer; and
automatically replaying, by the personal computer, the recorded voice message at the selected time.

39. The method of claim 38, further comprising the step of storing the recorded voice message on the personal computer.

40. The method of claim 38, wherein the step of selecting a time for voice message playback comprises selecting a time and date for voice message playback, at least the time for message playback selected by inputting a time into a text box of the graphical user interface through a keyboard of the personal computer.

41. A software product comprising instructions, stored on computer-readable media, wherein the instructions are executed by a computer to perform steps comprising:
selecting a time for voice message playback on a graphical user interface of a personal computer;
initiating, through the graphical user interface, the recording of a voice message by the personal computer; and automatically replaying, by the personal computer, the recorded voice message at the selected time.
